Europäisches Patentamt

European Patent Office

Office européen des brevets

(11) Veröffentlichungsnummer : **0 048 212 B1**

# (12) EUROPÄISCHE PATENTSCHRIFT

(45) Veröffentlichungstag der Patentschrift :
07.11.84

(21) Anmeldenummer : 81710039.9

(22) Anmeldetag : 22.08.81

(51) Int. Cl.³ : **G 01 C 21/18**

(54) **Kurs-Lage-Referenzgerät mit Kreisel.**

(30) Priorität : 04.09.80 DE 3033280

(43) Veröffentlichungstag der Anmeldung :
24.03.82 Patentblatt 82/12

(45) Bekanntmachung des Hinweises auf die Patenterteilung : 07.11.84 Patentblatt 84/45

(84) Benannte Vertragsstaaten :
DE FR GB

(56) Entgegenhaltungen :
DE-B- 2 903 282
FR-A- 2 403 544
FR-A- 2 447 538
US-A- 3 279 086
US-A- 3 938 256
US-A- 4 214 482
ARCHIV FÜR ELEKTROTECHNIK, Band 54, Nr. 2,
1971, Seiten 102-107, Springer Verlag W. AUER:
"Über einen neuartigen nordsuchenden Kurskreisel"

(73) Patentinhaber : **Bodenseewerk Gerätetechnik GmbH
Alte Nussdorfer Strasse 15 Postfach 1120
D-7770 Überlingen/Bodensee (DE)**

(72) Erfinder : **Krogmann, Uwe, Dipl.-Phys.
Zur Äsche 24
D-7770 Überlingen/Bodensee (DE)**

(74) Vertreter : **Wolgast, Rudolf, Dipl.-Chem. Dr. et al
Dipl.-Phys. Jürgen Weisse Dipl.Chem. Dr. Rudolf Wolgast Bökenbusch 41 Postfach 11 03 86
D-5620 Velbert 11 Langenberg (DE)**

EP 0 048 212 B1

**0 048 212**

## Beschreibung

Die Erfindung betrifft ein Kurs-Lage-Referenzgerät enthaltend einen zweiachsigen Lagekreisel mit einer Drallachse, einer ersten Eingangsachse und einer zweiten Eingangsachse, die zu der ersten Eingangsachse senkrecht ist, einen ersten und einen zweiten Lageabgriff auf der ersten bzw. der zweiten Eingangsachse des Lagekreisels und einen ersten und einen zweiten Drehmomenterzeuger auf der ersten bzw. der zweiten Eingangsachse des Lagekreisels.

Es sind als Kurs-Lage-Referenzgeräte Dreiachsen-Plattformen bekannt, bei denen die Plattform durch Kardanrahmen um drei zueinander senkrechte Achsen im Raum stabilisiert wird. Solche Plattformen sind recht aufwendig. Es sind andererseits Kurs-Lage-Referenzgeräte in « Strap-Down »-Ausführung bekannt, bei denen Winkelgeschwindigkeiten mittels Wendekreiseln gemessen und Lagesignale durch Verarbeitung der von den Wendekreiseln und Neigungsfühlern gewonnenen Signale erhalten werden. Diese Anordnungen sind zwar in ihrem mechanischen Aufbau einfacher, erfordern aber einen höheren Signalverarbeitungsaufwand.

Der Erfindung liegt die Aufgabe zugrunde, ein Kurs-Lage-Referenzgerät zu schaffen, bei welchem mechanischer und Signalverarbeitungsaufwand in einem optimalen Verhältnis zueinander stehen und Kurs und Lage mit guter Genauigkeit erhalten werden.

Erfindungsgemäß wird diese Aufgabe dadurch gelöst, daß

(a) das Gehäuse des Lagekreisels mit im wesentlichen horizontaler Drallachse und im wesentlichen horizontaler erster Eingangsachse auf einem Innenrahmen angeordnet ist,

(b) der Innenrahmen um eine zu der ersten Eingangsachse parallele Schwenkachse drehbar in einem Azimutrahmen gelagert ist,

(c) der Azimutrahmen seinerseits um eine gerätefeste, im wesentlichen vertikale Azimutachse drehbar gelagert ist,

(d) auf dem Innenrahmen ein erster Neigungssensor angeordnet ist, der auf eine Verschwenkung des Innenrahmens gegen die Horizontale um eine zur Schwenkrachse des Innenrahmens und der Azimutachse senkrechte Achse anspricht,

(e) auf dem Innenrahmen ein zweiter Neigungssensor angeordnet ist, der auf eine Verschwenkung des Innenrahmens gegen die Horizontale um die Schwenkachse des Innenrahmens anspricht,

(f) ein dritter und ein vierter Neigungssensor gehäusefest angeordnet sind und auf Verschwenkungen des Gehäuses um zueinander und zu der Azimutachse senkrechte Achsen ansprechen,

(g) auf der Azimutachse ein Azimut-Winkelgeber angeordnet ist,

(h) auf der Schwenkachse des Innenrahmens ein erster Servomotor angeordnet ist, durch welchen der Innenrahmen gegenüber dem Azimutrahmen verdrehbar ist,

(i) auf der Azimutachse ein zweiter Servomotor angeordnet ist, durch welchen der Azimutrahmen gegenüber dem Gehäuse verdrehbar ist,

(j) auf den ersten Servomotor über Umschaltmittel wahlweise das Signal des ersten Lageabgriffs des Lagekreisels oder das Signal des zweiten Lagesensors aufschaltbar ist,

(k) auf den zweiten Servomotor das Signal des zweiten Lageabgriffs des Lagekreisels aufgeschaltet ist,

(l) auf den zweiten Drehmomenterzeuger des Lagekreisels das Signal des zweiten Neigungssensors aufgeschaltet ist,

(m) Signalverarbeitungsmittel vorgesehen sind, auf welche das Signal $\psi_C$ des Azimut-Winkelgebers sowie die Signale des ersten, dritten und vierten Neigungssensors $L_y^C$, $L_x^G$ bzw. $L_y^G$ aufgeschaltet sind und die

$(m_1)$ Mittel enthalten zur Bildung $\sin \theta_B$, $\cos \theta_B$, $\sin \varphi_B$, $\cos \varphi_B$, $\sin \varphi_A$ und $\cos \varphi_A$, wobei $\theta_B$ der Nickwinkel des Geräts ist, auf den der dritte Neigungssensor anspricht, $\varphi_B$ der Rollwinkel des Geräts, auf den der vierte Neigungssensor anspricht, und $\varphi_A$ der Rollwinkel des Innenrahmens, auf den der erste Neigungssensor anspricht,

$(m_2)$ Mittel zur Bildung des wahren Kurswinkels $\psi_B$ aus der Beziehung

$$\tan \psi_B(t) = - \tan \psi_C(t) (\cos \theta_B(t)/\cos \varphi_B(t)) + \tan \varphi_B(t) \sin \theta_B(t)$$

und

$(m_3)$ Mittel zur Erzeugung eines Signal

$$U_z^C(t) = - \cos \varphi_A(t) \, \Omega_E \sin \Phi(t),$$

wobei $\Omega_E$ die Drehgeschwindigkeit der Erddrehung und $\Phi$ die geographische Breite ist, und

(n) das Signal $U_z^C(t)$ auf den zweiten Drehmomenterzeuger des Lagekreisels aufgeschaltet ist.

Eine Anfangsausrichtung nach geographisch Nord kann dadurch erreicht werden, daß

(o) das Ausgangssignal des zweiten Neigungssensors zusätzlich auf den ersten Drehmomenterzeuger aufschaltbar ist.

Ausführungsbeispiele der Erfindung sind nachstehend unter Bezugnahme auf die zugehörigen Zeichnungen näher erläutert :

2

Figur 1  ist eine schematische Darstellung des zweiachsigen Lagekreisels,

Figur 2  ist eine schematisch-perspektivische Darstellung und zeigt den Aufbau des Kurs-Lage-Referenzgeräts,

Figur 3  ist ein Blockdiagramm des Kurs-Lage-Referenzgeräts,

Figur 4  zeigt als Blockdiagramm die Signalverarbeitungsmittel,

Figur 5  ist eine Darstellung ähnlich Fig. 2 eines sich nach Nord ausrichtenden Lagekreisels,

Figur 6  zeigt den Aufbau der Ausrichtregler in Fig. 5.

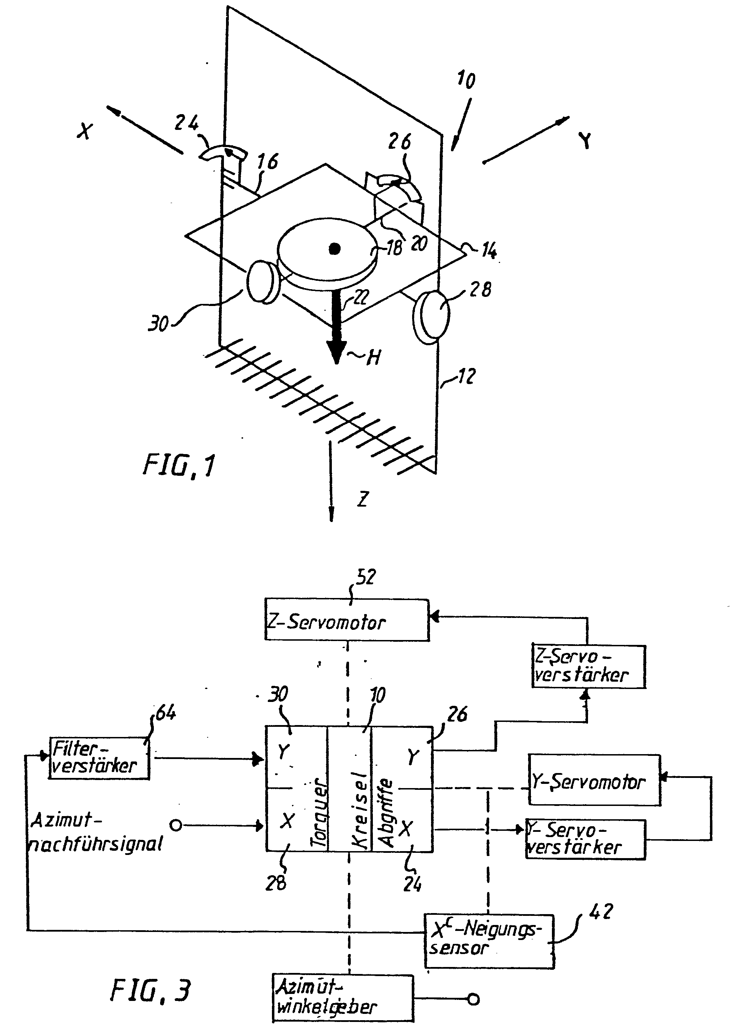

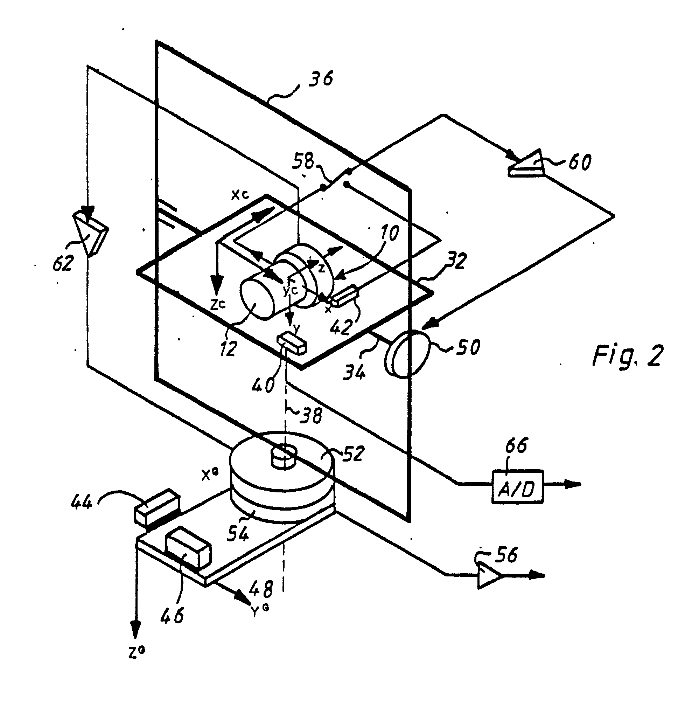

Das Kurs-Lage-Referenzgerät enthält einen zweiachsigen Lagekreisel 10, der in Fig. 1 in seiner Funktion schematisch dargestellt ist. Der Lagekreisel enthält ein Gehäuse 12, das dem in Fig. 2 sichtbaren Gehäuse 12 entspricht. In dem Gehäuse 12 ist ein Rahmen 14 um eine Achse 16 drehbar gelagert. In dem Rahmen 16 ist der Kreisel 18 um eine Achse 20, die senkrecht zur Achse 16 liegt, drehbar gelagert. Der Kreisel rotiert um eine Achse 22 (Drallachse), die senkrecht zu der Achse 20 verläuft. Der Drallvektor ist mit H bezeichnet. Auf der Achse 16, welche eine erste Eingangsachse des zweiachsigen Lagekreisels darstellt, sitzt ein erster Lageabgriff 24. Auf der Achse 20, die eine zweite Eingangsachse des zweiachsigen Lagekreisels 10 darstellt, sitzt ein zweiter Lageabgriff 26. Weiterhin sitzt auf der ersten Eingangsachse 16 ein erster Drehmomenterzeuger 28, und auf der zweiten Eingangsachse 20 sitzt ein zweiter Drehmomenterzeuger 30. Der Kreisel definiert in der dargestellten Lage ein Koordinatensystem, dessen x- und y-Achse längs der Eingangsachsen 16 bzw. 20 verläuft. Die z-Achse verläuft senkrecht zu der x- und y-Achse, und der Drallvektor H des Kreisels 18 ist längs der z-Achse gerichtet.

In Fig. 2 ist das Gehäuse 12 so angeordnet, daß der Drallvektor H im wesentlichen horizontal liegt. Fig. 2 zeigt auch die Koordinatenachsen x, y und z von Fig. 1.

Das Gehäuse 12 des Lagekreisels 10 ist mit im wesentlichen horizontaler Drallachse H und im wesentlichen horizontaler erster Eingangsachse 16 (x-Achse) auf einem Innenrahmen 32 angeordnet. Der Innenrahmen 32 ist um eine zu der ersten Eingangsachse 16 parallele Schwenkachse 34 drehbar in einem Azimutrahmen 36 gelagert. Der Azimutrahmen 36 ist seinerseits um eine gerätefeste im wesentlichen vertikale Azimutachse 38 drehbar gelagert.

Auf dem Innenrahmen 32 ist ein erster Neigungssensor 40 angeordnet, der auf eine Verschwenkung des Innenrahmens gegen die Horizontale um eine zur Schwenkachse 34 des Innenrahmens 32 und zu der Azimutachse 38 senkrechte Achse anspricht. Der Neigungssensor 40 kann beispielsweise ein Beschleunigungsmesser sein, dessen Empfindlichkeitsachse parallel zu der Schwenkachse 34 verläuft. Auf dem Innenrahmen 32 ist ein zweiter Neigungssensor 42 angeordnet, der auf eine Verschwenkung des Innenrahmens 32 gegen die Horizontale um die Schwenkachse 34 des Innenrahmens 32 anspricht. Auch dieser Neigungssensor kann ein Beschleunigungsmesser sein, dessen Empfindlichkeitsachse parallel zur z-Achse des Kreisels verläuft.

Wie in Fig. 2 dargestellt ist, definiert der Innenrahmen 32 ein Koordinatensystem mit $x^C$-Achse, einer $y^C$-Achse und einer $z^C$-Achse. Die $y^C$-Achse verläuft parallel zu der Schwenkachse 34, die $x^C$-Achse verläuft senkrecht dazu im wesentlichen horizontal, und die $z^C$-Achse verläuft senkrecht zu den anderen beiden Achsen nach unten. In der dargestellten Ausgangslage ist der Kreisel 10 mit der z-Achse parallel sur $x^C$-Achse orientiert.

Ein dritter und vierter Neigungssensor 44 bzw. 46 sind gehäusefest angeordnet und sprechen auf Schwenkungen des Gehäuses 48 um zueinander und zu der Azimutachse 38 senkrechte Achsen an.

Das Gehäuse 48 definiert wieder ein Koordinatensystem mit einer $x^G$-Achse, $y^G$-Achse und einer $z^G$-Achse. Die $z^G$-Achse ist dabei parallel zu der Azimutachse 38. Die Neigungssensoren 44 und 46 sind so angeordnet, daß der Neigungssensor 44 auf eine Verschwenkung um die $y^G$-Achse und der Neigungssensor 46 auf eine Verschwenkung um die $x^G$-Achse anspricht. Es kann sich dabei um Beschleunigungsmesser handeln, deren Empfindlichkeitsachsen parallel zu der $x^G$-Achse bzw. der $y^G$-Achse verlaufen.

Auf der Schwenkachse 34 des Innenrahmens 32 ist ein erster Servomotor 50 angeordnet, durch welchen der Innenrahmen 32 gegenüber dem Azimutrahmen 36 verdrehbar ist. Auf der Azimutachse 38 ist ein zweiter Servomotor 52 angeordnet, durch welchen der Azimutrahmen gegenüber dem Gehäuse 48 verdrehbar ist. Auf der Azimutsachse 38 ist weiterhin ein Azimut-Winkelgeber 54 angeordnet. Dieser liefert über einen Verstärker 56 ein Winkelsignal $\psi_c$, welches die Verdrehung des Azimutrahmens 36 gegenüber dem Gehäuse 48 um die Azimutachse 38 darstellt.

Auf den ersten Servomotor 50 ist über Umschaltmittel 58 wahlweise das Signal des ersten Lageabgriffs 24 (Fig. 1) des Lagekreisels 10 oder das Signal des zweiten Neigungssensors 42 aufschaltbar. Die Signale werden durch einen Verstärker 60 in geeigneter Weise verstärkt. Auf den zweiten Servomotor 52 ist über einen Verstärker 62 das Signal des zweiten Lageabgriffs 26 des Lagekreisels 10 abgeschaltet.

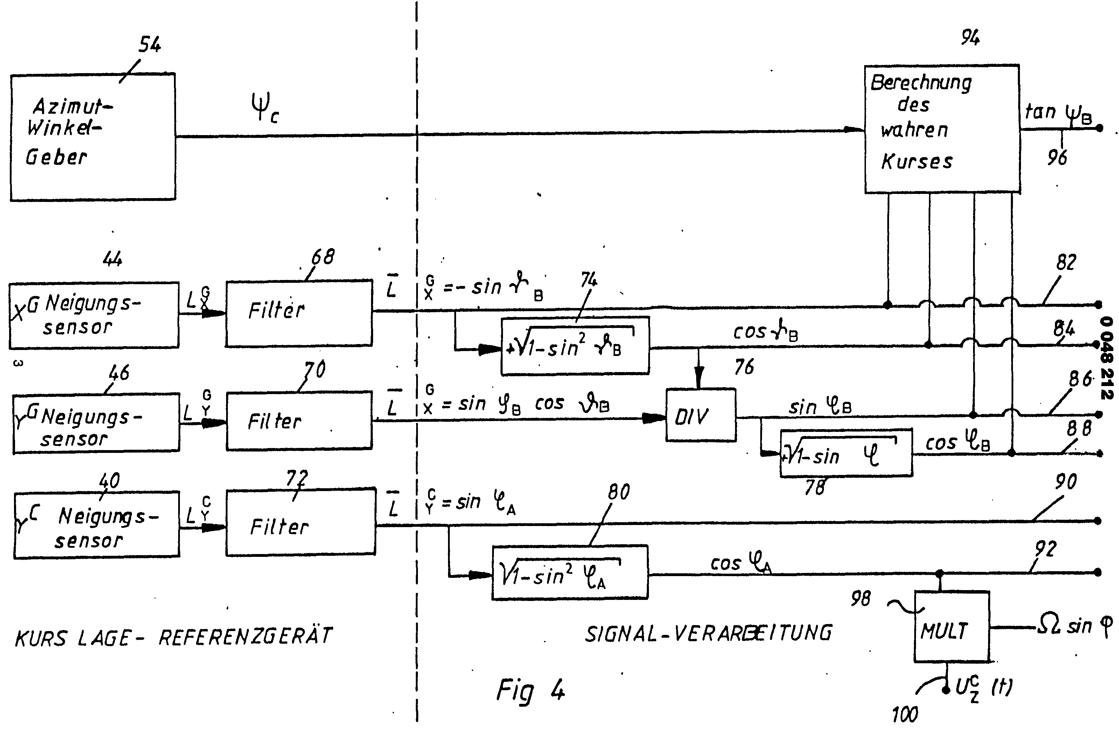

Wie aus dem Blockdiagramm von Fig. 3 ersichtlich ist, ist außerdem auf den zweiten Drehmomenterzeuger 30 des Lagekreisels 10 das Signal des zweiten Neigungssensors 42 über eine geeignete Filter- und Verstärkeranordnung 64 aufgeschaltet.

Das Signal des ersten Neigungssensors 40 wird über einen Analog-Digital-Wandler 66 ausgegeben und in noch zu .beschreibender Weise Signalverarbeitungsmitteln zugeführt.

In Fig. 3 sind durchgezogenen Linien Signalleitungen bezeichnet, während die gestrichelten Linien mechanische Verbindungen symbolisieren.

Die Signalverarbeitungsmittel, die in Fig. 4 dargestellt sind, erhalten das Signal $\psi_c$ des Azimut-

Winkelgebers 54 sowie die Signale $L_x^c$ des ersten Neigungssensors 40, $L_x^G$ des dritten Neigungssensors 44 und $L_y^G$ des vierten Neigungssensors 46. Sie enthalten Mittel zur Bildung von $\sin \theta_B$, $\cos \theta_B$, $\sin \varphi_B$, $\cos \varphi_B$, $\sin \varphi_A$ und $\cos \varphi_A$, wobei $\theta_B$ der Nickwinkel des Geräts ist, auf den der dritte Neigungssensor 44 anspricht, $\varphi_B$ der Rollwinkel des Geräts, auf den der vierte Neigungssensor 46 anspricht und $\varphi_A$ der Rollwinkel des Innenrahmens 32, auf den der erste Neigungssensor 40 anspricht. Die Signalverarbeitungsmittel enthalten weiterhin Mittel zur Bildung des wahren Kurswinkels $\psi_B$ aus der Beziehung

$$\tan \psi_B(t) = - \tan \psi_C(t) \; (\cos \theta_B(t)/\cos \varphi_B(t)) + \tan \varphi_B(t) \sin \theta_B(t)$$

sowie Mittel zur Erzeugung eines Signals

$$U_z^C(t) = - \cos \varphi_A(t) \; \Omega_E \sin \Phi(t),$$

wobei $\Omega_E$ die Drehgeschwindigkeit der Erddrehung und $\Phi$ die geographische Breite ist. Wie aus Fig. 3 ersichtlich ist wird das Signal $U_z^c(t)$ auf den ersten Drehmomenterzeuger 28 des Lagekreisels 10 aufgeschaltet.

Der Aufbau der Signalverarbeitungsmittel ist aus Fig. 4 ersichtlich.

Die Signale $L_x^G$, $L_y^G$, $L_y^C$ von den Neigungssensoren 44, 46 bzw. 40 werden durch Tiefpaßfilter 68, 70 bzw. 72 gefiltert, um höherfrequente Fahrzeugschwingungen auszuschalten. Hierzu ist ein Tiefpaß zweiter Ordnung mit einer Zeitkonstanten von 4 bis 8 Sekunden bereits ausreichend. Die so gefilterten Signale $L_x^{\overline{G}}$, $L_y^{\overline{G}}$ und $L_y^{\overline{C}}$ liefern, wenn als Neigungssensoren Beschleunigungsmesser benutzt werden,

$$L_x^{\overline{G}} = - \sin \theta_B,$$
$$L_y^{\overline{G}} = \sin \varphi_B \cdot \cos \theta_B,$$
$$L_y^{\overline{C}} = \sin \varphi_A.$$

Bei den hier auftretenden kleinen Nick- und Rollwinkel kann aus den Sinus der Kosinus ohne Vorzeichenprobleme aus den Beziehungen

$$\cos \theta_B = + \sqrt{1 - \sin^2 \theta_B}$$
$$\cos \varphi_B = + \sqrt{1 - \sin^2 \varphi_B} \quad \text{und}$$
$$\cos \varphi_A = \sqrt{1 - \sin^2 \varphi_A}$$

gewonnen werden.

In Fig. 4 ist durch Block 74 dargestellt, daß auf diese Weise aus dem Signal $- \sin \theta_B$ das Signal $\cos \theta_B$ gewonnen wird. Aus dem Signal $\sin \varphi_B \cdot \cos \theta_B$ wird durch Division durch $\cos \varphi_B$, dargestellt durch Block 76, das Signal $\sin \varphi_B$ erhalten. Aus diesem wird wieder durch die Wurzelbeziehung, die durch Block 78 dargestellt ist, ein Signal $\cos \varphi_B$ gewonnen. Aus dem Signal $\sin \varphi_A$ wird durch die Wurzelbeziehung, wie durch Block 80 dargestellt ist, ein Signal $\cos \varphi_A$ gewonnen. An Ausgängen 82 bis 92 erscheinen daher die Sinus und Kosinus der Lagewinkel.

Die Signale $- \sin \theta_B$, $\cos \theta_B$, $\sin \varphi_B$ und $\cos \varphi_B$ werden Rechnermitteln 94 zusammen mit dem Signal $\psi_C$ des Azimut-Winkelgebers 54 zugeführt, durch welche in dem Fachmann geläufiger Weise nach der Beziehung

$$\tan \psi_B(t) = - \tan \psi_C(t) \; (\cos \theta_B(t)/\cos \varphi_B(t)) + \tan \varphi_B(t) \sin \theta_B(t)$$

der Tangens des wahren Kurswinkels gebildet und an einem Ausgang 96 ausgegeben wird.

Das Signal $\cos \varphi_A$ wird, wie durch Block 98 dargestellt ist, mit $\Omega_E \cdot \sin \Phi$ multipliziert, wobei $\Omega_E$ die Drehgeschwindigkeit der Erddrehung und $\Phi$ die geographische Breite ist. An einem Ausgang 100 erscheint dann das Signal

$$U_z^C(t) = - \cos \varphi_A(t) \; \Omega_E \sin \Phi(t).$$

Dieses Signal wird, wie in Fig. 3 dargestellt ist, auf den Drehmomenterzeuger 28 des Lagekreisels 10 geschaltet.

Durch die beiden Rahmen 32 und 36 ist das Kurs-Lage-Referenzgerät um zwei Achsen von den Bewegungen des Fahrzeugs entkoppelt. Dies wird durch Aufschaltung der Abgriffsignale der Lageabgriffe 24 bzw. 26 des Lagekreisels auf den zugehörigen Servomotor 50 bzw. 52 erreicht. Die Übertragungsfunktion der Verstärker 60 und 62 muß dabei so gewählt werden, daß die Servokreise das gewünschte statische und dynamische Verhalten zeigen.

Vor dem Start wird das Gerät derart ausgerichtet, daß die $x^C$-Achse mit der $x^R$-Achse des erdfesten Koordinatensystems, also vorzugsweise der « Gitter-Nord »-Richtung eines UTM-Gitterkoordinatensystem zusammenfällt. Zu diesem Zweck wird der Innenrahmen 32 zunächst horizontal ausgerichtet, indem die Umschaltmittel 58 den Servomotor 50 auf den Neigungssensor 42 schalten.

0 048 212

Während der Fahrt soll dann die Ausrichtung des Lagekreisels 10 beibehalten werden. Zu diesem Zweck ist, wie aus Fig. 3 ersichtlich ist, der zweite Lagegeber 42 über die Filter- und Verstärkeranordnung 64 auf den Drehmomenterzeuger 30 geschaltet. Die Entkopplung des Lagekreisels 10 von Bewegungen des Fahrzeugs erfolgt nach Umschalten der Umschaltmittel 58 in die dargestellte Lage dadurch, daß die Abgriffsignale des Lagekreisels 10 auf die Servomotoren 50 und 52 geschaltet sind. Bei einer Abweichung des Rahmens 32 von der horizontalen Ausrichtung liefert der Neigungssensor 42 ein Signal, welches über den Drehmomenterzeuger 30 ein Drehmoment auf den Kreisel 18 ansübt. Dieses Drehmoment bewirkt eine Auslenkung des Kreisels um die Achse 16 und damit ein Signal am Abgriff 24. Dieses Signal bewirkt über den Stellmotor 50 eine horizontale Ausrichtung des Rahmens 32.

Auf den Drehmomenterzeuger 28 des Kreisels 10 wird ein Signal ausgeschaltet, welches der in Richtung der Azimutachse 38 fallenden Komponente der Erddrehungen entspricht. Dadurch wird der Einfluß der Erddrehung kompensiert, der sonst (bei raumfest gehaltenem Kreisel) eine Drift des Kreisels relativ zu dem erdfesten Koordinatensystem zur Folge hätte.

Mit einem so ausgerichtet gehaltenen Kreisel wird die Signalverarbeitung wesentlich vereinfacht. Es ergibt sich eine hinsichtlich des Aufwands für mechanischen Aufbau und Signalverarbeitung besonders günstige Anordnung.

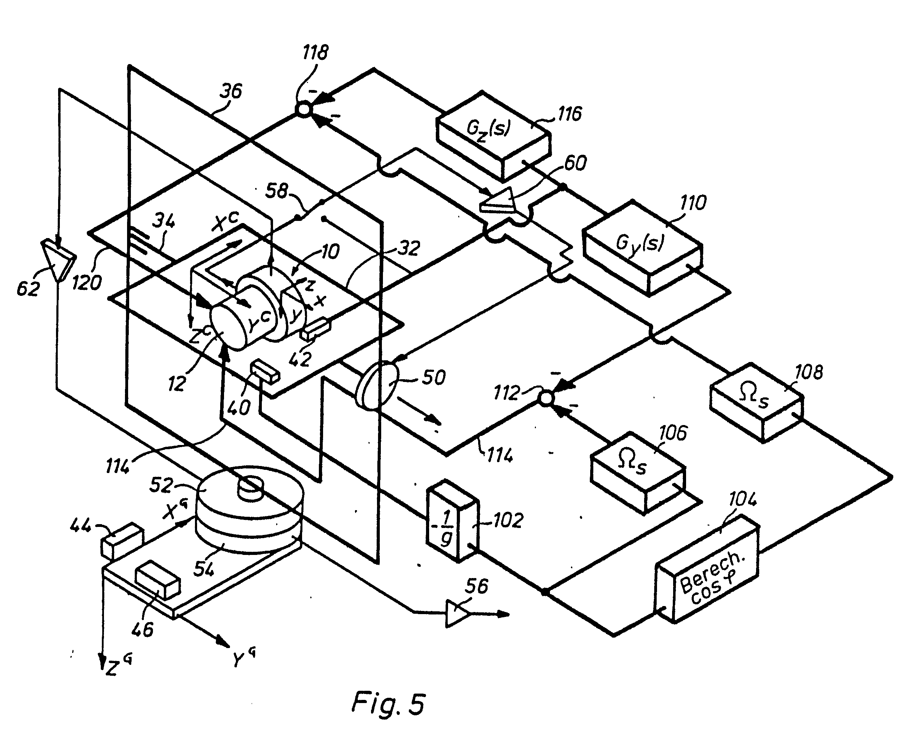

Die Anordnung nach Fig. 5 ist im Prinzip ähnlich aufgebaut wie die Anordnung nach Fig. 2, und entsprechende Teile sind in beiden Figuren mit den gleichen Bezugszeichen versehen.

In Fig. 5 wird das Signal des ersten Neigungssensors 40 durch − g dividiert, wie durch Block 102 dargestellt ist. Es ergibt sich so sin φ, wenn φ der Neigungswinkel des Innenrahmens 32 um die x^c-Achse ist. Aus sin φ wird durch eine Schaltung 104 (ähnlich Schaltung 80 in Fig. 4) cos φ gebildet. Der Wert sin φ wird, wie durch Block 106 angedeutet, mit

$$\Omega_s = \Omega_E \cdot \sin \Phi$$

multipliziert. Dabei ist $\Omega_s$ die Vertikalkomponente der Erddrehgeschwindigkeit, $\Omega_E$ die Drehgeschwindigkeit der Erde und $\Phi$ die geographische Breite. Der so multiplizierte Wert $\Omega_s$ sin φ wird auf den um die zweite Eingangsache 20, d. h. die y-Achse, des Lagekreisels 10 wirksamen zweiten Drehmomenterzeuger 30 (Fig. 1) geschaltet. Der von der Schaltung 104 gelieferte Wert cos φ wird, wie durch Block 108 angedeutet, mit der Vertikalkomponente $\Omega_s$ der Erddrehgeschwindigkeit $\Omega_E$ multipliziert. Der so multiplizierte Wert $\Omega_s$ sin φ wird als Signal auf den um die erste Eingangsachse 16 (Fig. 1), d. h. die x-Achse, des Lagekreisels 10 wirksamen ersten Drehmomenterzeuger 28 geschaltet.

Es wird weiterhin das Signal des zweiten Neigungssensors 42 einen Ausrichtregler 110 dem Signal $\Omega_s$ sin φ überlagert und auf den um die zweite Eingangsache 20, die y-Achse, des Lagekreisels 10 wirksamen zweiten Drehmomenterzeuger 30 (Fig. 1) geschaltet. Das ist durch den Summierpunkt 112, an dem beide Signale mit negativem Vorzeichen anliegen, und Linie 114 angedeutet. Die Übertragungsfunktion des Ausrichtreglers ist mit $G_y$ (s) bezeichnet, wobei s die Variable der Laplace Transformierten ist. Das Signal des zweiten Neigungssensors 42 wird außerdem über einen Ausrichtregler 116 dem Signal $\Omega_s$ cos φ überlagert und auf den um die erste Eingangsache 16, die x-Achse, des Lagekreisels 10 wirksamen ersten Drehmomenterzeuger 28 (Fig. 1) geschaltet. Das ist durch den Summierpunkt 118, an dem beide Signale mit negativem Vorzeichen anliegen, und Linie 120 angedeutet. Die Übertragungsfunktion des Ausrichtreglers 116 ist mit $G_z$ (s) bezeichnet.

Die Indices y bzw. z der Übertragungsfunktionen $G_y$(s) und $G_z$(s) bedeuten, daß die übertragenen Signale eine Auslenkung des Kreisels 18 um die y^c- bzw. z^c-Achse des innenrahmenfesten Koordinatensystems hervorrufen.

Die beschriebene Anordnung wirkt wie folgt :

Es sei angenommen, daß der Lagekreisel 10 mit seiner Drallachse 22, der z-Achse, annähernd nach Nord ausgerichtet ist. Der Innenrahmen 32 ist durch Aufschalten des zweiten Neigungssensors 42 über die Umschaltmittel 58 auf den Servomotor 50 um die Schwenkachse 34 im wesentlichen horizontal ausgerichtet. Um die x^c-Achse ist der Innenrahmen 32 jedoch nicht von dem Gehäuse entkoppelt. Es kann daher eine Neigung φ um die x^c-Achse bestehen, die, wie beschrieben, rechnerisch berücksichtigt wird. Infolge dieser Neigung φ fühlt der Lagekreisel 10 eine Komponente $\Omega_s$ sin φ der Vertikalkomponente $\Omega_s$ der Erdbeschleunigung um die erste Eingangsachse 16 (Fig. 1), d. h. die x-Achse in Fig. 5. Diese Komponente wird durch das auf den zweiten Drehmomenterzeuger 30 geschaltete Signal, das proportional $\Omega_s$ sin φ ist, kompensiert.

Um die zweite Eingangsachse 20 des Kreisels 10, die y-Achse in Fig. 5, wirkt die Komponente $\Omega_s$ cos φ der Vertikalkomponente der Erddrehung. Diese Komponente wird durch das auf den ersten Drehmomenterzeuger 28 geschaltete Signal, das porportional $\Omega_s$ cos φ ist, kompensiert.

Der Innenrahmen 32 wird daher nach Umschalten der Umschaltmittel 58 zunächst im wesentlichen in der Anfangslage gehalten.

Die Aufschaltung des Signals von dem zweiten Neigungssensor 42 über den Ausrichtregler 110 auf den zweiten Drehmomenterzeuger 30 bewirkt eine Auslenkung des Kreisels 18 um die erste Eingangsachse 16. Das führt zu einem Abgriffsignal am Abgriff 24, der auf die Bewegung des Kreisels 18 um die Eingangsachse 16, die x-Achse in Fig. 5 anspricht. Das Abgriffsignal vom Abgriff 24 steuert über den Verstärker 60 den Servomotor 50, und dieser richtet den Innenrahmen 32 solange aus, bis das Signal des

5

Neigungsfühlers 42 verschwindet. Es erfolgt so eine ständige Feinausrichtung des Innenrahmens 32 um die Schwenkachse 34.

Das Signal des Neigungsfühlers 42 wird auch über den Ausrichtregler 116 auf den ersten Drehmomenterzeuger 28 geschaltet. Das bewirkt eine Ausrichtung der Kreiseldrallachse 22 nach Nord.

Wenn die Kreiseldrallachse 22 genau horizontal und in der Meridianebene liegt, so wird die Horizontalkomponente der Erddrehung an den Eingangsachsen 16 und 20 des Lagekreisels 10, also an der x-Achse und der y-Achse in Fig. 5 nicht wirksam. Weicht dagegen die Kreiseldrallachse 22 von der Meridianebene etwas ab, dann wirkt eine Komponente auch der Horizontalkomponente der Erddrehung auf die Eingangsachse 16, d. h. in Richtung der x-Achse von Fig. 5. Der im inertialen Raum festgehaltene Kreisel 18 bewirkt eine Drehung des Rahmens 14 gegenüber dem Gehäuse 12 und damit ein Signal am Abgriff 16. Dieses Signal ist über die Umschaltmittel 58 und den Verstärker 60 auf den Servomotor 50 geschaltet. Der Servomotor 50 verschwenkt den Innenrahmen 32 in dem Bestreben, das Abgriffsignal am Abgriff 16 zu null zu machen. Der Innenrahmen 32 wandert also um die $y^c$-Achse aus.

Diese Auswanderung wird durch die Aufschaltung des Signals des Neigungssensors 42 über den Ausrichtregler 110 auf den Drehmomenterzeuger 30 nicht kompensiert, da nicht nur eine einmalige Fehlausrichtung zu korrigieren ist, was in diesem Kreis geschieht, sondern ein ständiges Weglaufen des Innenrahmens 32 durch die Horizontalkomponente der Erddrehung.

Durch die Aufschaltung des Signals des zweiten Neigungssensors 42 über den Ausrichtregler 116 auf den ersten Drehmomenterzeuger 28, der um die x-Achse in Fig. 5 wirkt, wird der Kreisel 18 um die Eingangsachse 20 ausgelenkt, also um die y-Achse in Fig. 5, und der zweite Abgriff 26 liefert ein Abgriffsignal. Das Signal von diesem Abgriff 26 wird über den Verstärker 62 auf den Servomotor 52 gegeben. Dieser verstellt den Azimutrahmen 32, bis die Kreiseldrallachse 22 nach Nord ausgerichtet ist und keine Komponente der Horizontalkomponente der Erddrehgeschwindigkeit mehr an der Eingangsachse 16 wirksam wird.

Der Lagekreisel 10 richtet sich so selbständig unter Verwendung der sowieso vorhandenen Sensoren, Drehmomenterzeuger und Stellmotoren nach Nord aus. Anschließend kann der Lagekreisel 10 in der im Zusammenhang mit Fig. 1 bis 4 beschriebenen Weise als Kurs-Lage-Referenzgerät arbeiten.

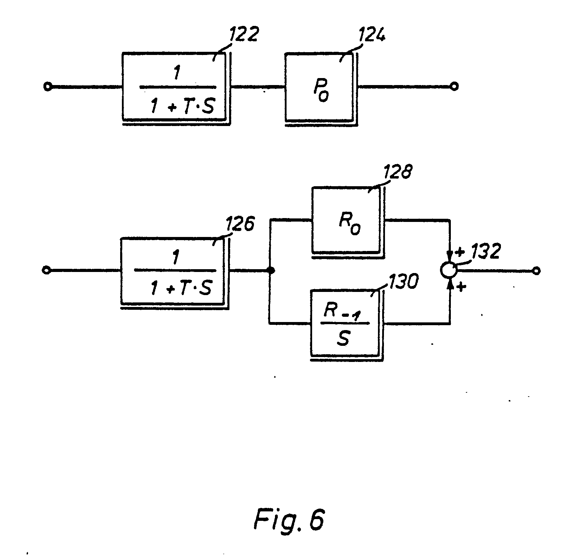

Fig. 6 zeigt den Aufbau der Ausrichtregler 110 und 116. Der Ausrichtregler 110 hat eine Übertragungsfunktion

$$G_y(s) = P_o/(1 + T_s).$$

Er enthält einen Tiefpass 122 und einen proportionalen Verstärker 124. Der Ausrichtregler 116 hat eine Übertragungsfunktion

$$G_z(s) = (1/(1 + T_s))(R_o + (R_{-1}/s)).$$

Er enthält einen Tiefpass 126 mit dem zwei zueinander parallele Kanäle in Reihe geschaltet sind. Der eine Kanal enthält einen proportionalen Verstärker 128. Der andere Kanal enthält einen Integrator 130. Die Ausgänge der beiden Kanäle werden in einem Sullierpunkt 132 addiert.

**Ansprüche**

1. Kurs-Lage-Referenzgerät enthaltend

einen zweiachsigen Lagekreisel (10) mit einer Drallachse (14), einer ersten Eingangsachse (16) und einer zweiten Eingangsachse (18), die zu der ersten Eingangsachse (16) senkrecht ist,

einen ersten (24) und einen zweiten Lageabgriff (26) auf der ersten (16) bzw. der zweiten Eingangsachse (18) des Lagekreisels (10) und

einen ersten (28) und einen zweiten Drehmomenterzeuger (30) auf der ersten (16) bzw. der zweiten Eingangsachse (28) des Lagekreisels (10),
dadurch gekennzeichnet, daß

(a) das Gehäuse (12) des Lagekreisels (10) mit im wesentlichen horizontaler Drallachse (14) und im wesentlichen horizontaler erster Eingangsachse (16) auf einem Innenrahmen (32) angeordnet ist,

(b) der Innenrahmen (32) um eine zu der ersten Eingangsachse (16) parallele Schwenkachse (34) drehbar in einem Azimutrahmen (36) gelagert ist,

(c) der Azimutrahmen (36) seinerseits um eine gerätefeste, im wesentlichen vertikale Azimutachse (38) drehbar gelagert ist,

(d) auf dem Innenrahmen (32) ein erster Neigungssensor (40) angeordnet ist, der auf eine Verschwenkung des Innenrahmens (32) gegen die Horizontale um eine zur Schwenkachse (34) des Innenrahmens (32) und der Azimutachse (38) senkrechte Achse anspricht,

(e) auf dem Innenrahmen (32) ein zweiter Neigungssensor (42) angeordnet ist, der auf eine Verschwenkung des Innenrahmens (32) gegen die Horizontale um die Schwenkachse (34) des Innenrahmens (32) anspricht,

(f) ein dritter und ein vierter Neigungssensor (44, 46) gehäusefest angeordnet sind und auf Verschwenkungen des Gehäuses (48) um zueinander und zu der Azimutachse (38) senkrechte Achsen ($y^G$, $x^G$) ansprechen,

(g) auf der Azimutachse (38) ein Azimut-Winkelgeber (54) angeordnet ist,

(h) auf der Schwenkachse (34) des Innenrahmens (32) ein erster Servomotor (50) angeordnet ist, durch welchen der Innenrahmen (32) gegenüber dem Azimutrahmen (36) verdrehbar ist,

(i) auf der Azimutachse (38) ein zweiter Servomotor (52) angeordnet ist, durch welchen der Azimutrahmen (38) gegenüber dem Gehäuse (48) verdrehbar ist,

(j) auf den ersten Servomotor (50) über Umschaltmittel (58) wahlweise das Signal des ersten Lageabgriffs (24) des Lagekreisels (10) oder das Signal des zweiten Lagesensors (42) aufschaltbar ist,

(k) auf den zweiten Servomotor (52) das Signal des zweiten Lageabgriffs (26) des Lagekreisels (10) aufgeschaltet ist,

(l) auf den zweiten Drehmomenterzeuger (30) des Lagekreisels (10) das Signal des zweiten Neigungssensors (42) aufgeschaltet ist,

(m) Signalverarbeitungsmittel (Fig. 4) vorgesehen sind, auf welche das Signal $\psi_C$ des Azimut-Winkelgebers (54) sowie die Signale des ersten, dritten und vierten Neigungssensors (40, 44, 46) $L_y^C$, $L_x^G$ bzw. $L_y^G$ aufgeschaltet sind und die

($m_1$) Mittel (68 bis 92) enthalten zur Bildung von $\sin\theta_B$, $\cos\theta_B$, $\sin\varphi_B$, $\cos\varphi_B$, $\sin\varphi_A$ und $\cos\varphi_A$, wobei $\theta_B$ der Nickwinkel des Geräts ist, auf den der dritte Neigungssensor (44) anspricht, $\varphi_B$ der Rollwinkel des Geräts, auf den der vierte Neigungssensor (46) anspricht, und $\varphi_A$ der Rollwinkel des Innenrahmens (32), auf den der erste Neigungssensor (40) anspricht,

($m_2$) Mittel (94) zur Bildung des wahren Kurswinkels $\psi_B$ aus der Beziehung

$$\tan\psi_B(t) = -\tan\psi_C(t)\,(\cos\theta_B(t)/\cos\varphi_B(t)) + \tan\varphi_B(t)\,\sin\theta_B(t)$$

und

($m_3$) Mittel (98) zur Erzeugung eines Signals

$$U_z^C(t) = -\cos\varphi_A(t)\,\Omega_E\,\sin\Phi(t),$$

wobei $\Omega_E$ die Drehgeschwindigkeit der Erddrehung und $\Phi$ die geographische Breite ist, und

(n) das Signal $U_z^C(t)$ auf den zweiten Drehmomenterzeuger (30) des Lagekreisels (10) aufgeschaltet ist.

2. Kurs-Lage-Referenzgerät nach Anspruch 1, dadurch gekennzeichnet, daß zur Anfangsausrichtung nach geographisch Nord

(o) das Ausgangssignal des zweiten Neigungssensors (42) zusätzlich auf den ersten Drehmomenterzeuger (28) aufschaltbar ist.

## Claims

1. Heading attitude reference system comprising

a two-axis attitude gyro (10) having a spin axis (14), a first input axis (16) and a second input axis (18), which is perpendicular to the first input axis (16),

a first (24) and a second position pick-off (26) on the first (16) and the second input axes (18) of the attitude gyro (10), respectively,

a first (28) and a second torquer (30) on the first (16) and the second input axis (28) of the attitude gyro (10), respectively,

characterized in that

(a) a housing (12) of the attitude gyro (10) is arranged on an inner gimbal (32), the spin axis (14) and the first input axis (16) of said attitude gyro (10) being substantially horizontal,

(b) the inner gimbal (32) is rotatably mounted in an azimuth gimbal (36) about a pivot axis (34), which is parallel to the first input axis (16),

(c) the azimuth gimbal (36), in turn is rotatably mounted about an instrument-fixed substantially vertical azimuth axis (38),

(d) a first inclination sensor (40) is arranged on the inner gimbal (32) and responds to deflection of the inner gimbal (32) relative to the horizontal about an axis, which is perpendicular to the pivot axis (34) of the inner gimbal (32) and to the azimuth axis (38),

(e) a second inclination sensor (42) is arranged on the inner gimbal (32) and responds to deflection of the inner gimbal (32) relative to the horizontal about the pivot axis (34) of the inner gimbal (32),

(f) a third and a fourth inclination sensor (44, 46) are arranged in a housing-fixed manner and respond to deflection of the housing (48) about axes ($y^G$, $x^G$), which are mutually orthogonal and perpendicular to the azimuth axis (38),

(g) an azimuth angle indicator (54) is arranged on the azimuth axis (38),

(h) a first servomotor (50) is arranged on the pivot axis (34) of the inner gimbal (32), which servomotor (50) is adapted to rotate the inner gimbal (32) relative to the azimuth gimbal (36),

(i) a second servomotor (52) is arranged on the azimuth axis (38), which servomotor (52) is adapted to rotate the azimuth gimbal (38) relative to the housing (48),

(j) the signal from the first position pick-off (24) of the attitude gyro (10) or the signal from the second position pick-off (42) optionally is applied to the first servomotor (50) through switching means (58),

(k) the signal from the second position pick-off (26) of the attitude gyro (10) is applied to the second servomotor (52),

(l) the signal from the second inclination sensor (42) is applied to the second torquer (30) of the attitude gyro (10),

(m) signal processing means (fig. 4) are provided, to which the signal $\psi_C$ from the azimuth angle indicator (54) and the signals from the first, third and fourth inclination sensors (40, 44, 46) $L_y^C$, $L_x^G$, and $L_y^G$, respectively, are applied, and which signal processing means comprise

($m_1$) means (68 to 92) for forming sin $\theta_B$, cos $\theta_B$, sin $\varphi_B$, cos $\varphi_B$, sin $\varphi_A$ and cos $\varphi_A$, $\theta_B$ being the pitch angle of the instrument, to which the third inclination sensor (44) responds, $\varphi_B$ being the roll angle of the instrument, to which the fourth inclination sensor (46) responds, and $\varphi_A$ being the roll angle of the inner gimbal (32), to which the first inclination sensor (40) responds,

($m_2$) means (94) for forming the true directional $\psi_B$ by means of the relation

$$\tan \psi_B(t) = - \tan \psi_C(t) \, (\cos \theta_B(t)/\cos \varphi_B(t)) + \tan \varphi_B(t) \sin \theta_B(t)$$

and

($m_3$) means (98) for generating a signal

$$U_z^C(t) = - \cos \varphi_A(t) \, \Omega_E \sin \Phi(t),$$

wherein $\Omega_E$ is the angular rate of the rotation of the earth and $\Phi$ is the geographic latitude, and

(n) the signal $U_z^C$ (t) is applied to the second torquer (30) of the attitude gyro (10).

2. Direction-position-reference instrument as set forth in claim 1, characterized in that, for the initial alignment to geographic north,

(o) the output signal from the second inclination sensor (42) further is applied to the first torquer (28).

**Revendications**

1. Appareil de référence de cap et d'assiette comportant

un gyroscope d'orientation (10) biaxial ayant un axe de spin (14), un premier axe d'entrée (16) et un deuxième axe d'entrée (18) qui est perpendiculaire sur le premier axe d'entrée (16),

un premier (24) et un deuxième capteur d'orientation (26) sur respectivement le premier (16) et deuxième axe d'entrée (18) du gyroscope d'orientation (10), et

un premier (28) et un deuxième générateur de couple (30) sur respectivement le premier (16) et le deuxième axe d'entrée (28) du gyroscope d'orientation (10),
caractérisé par le fait

(a) que le boîtier (12) du gyroscope d'orientation (10) avec l'axe de spin (14) et le premier axe d'entrée (16) essentiellement horizontal, est disposé sur un cadre intérieur (32),

(b) que le cadre intérieur (32) est monté de manière rotative autour d'un axe de pivot (34) parallèle au premier axe d'entrée (16) dans un cadre d'azimut (36),

(c) que le cadre d'azimut (36) est, de sa part, monté de manière rotative autour d'un axe azimutal (38) qui est fixe par rapport à l'appareil et essentiellement vertical,

(d) que sur le cadre intérieur (32) est disposé un premier capteur d'inclinaison (40) qui répond au balayage horizontal du cadre intérieur (32) autour d'un axe qui est perpendiculaire sur l'axe de pivot (34) du cadre intérieur (32) et sur l'axe azimutal (38),

(e) que sur le cadre intérieur (32) est disposé un deuxième capteur d'inclinaison (42) qui répond au balayage horizontal du cadre intérieur (32) autour de l'axe de pivot (34) du cadre intérieur (32),

(f) qu'un troisième et un quatrième capteur d'inclinaison (44, 46) sont disposés de manière fixe par rapport à l'appareil et qu'ils répondent aux balayages du boîtier (48) autour des axes ($y^G$, $x^G$) perpendiculaires l'un sur l'autre et sur l'axe azimutal (38),

(g) qu'un capteur d'angle azimutal (54) est disposé sur l'axe azimutal (38),

(h) que sur l'axe de pivot (34) du cadre intérieur (32) est disposé un premier servomoteur (50) qui peut tourner le cadre intérieur (32) par rapport au cadre d'azimut (36),

(i) que sur l'axe azimutal (38) est disposé un deuxième servomoteur (52) qui peut tourner le cadre d'azimut (38) par rapport au boîtier (48),

(j) que facultativement le signal du premier capteur d'orientation (24) du gyroscope d'orientation (10) ou le signal du deuxième capteur d'orientation (42) peut être appliqué au premier servomoteur (50) par l'intermédiaire de moyens de commutation (58),

(k) que le signal du deuxième capteur d'orientation (26) du gyroscope d'orientation (10) est appliqué au deuxième servomoteur (52),

(l) que le signal du deuxième capteur d'inclinaison (42) est appliqué au deuxième générateur de couple (30) du gyroscope d'orientation (10),

(m) que des moyens de traitement de signaux (figure 4) sont prévus, auxquels sont appliqués le signal $\psi_C$ du capteur d'angle azimutal (54) ainsi que les signaux du premier, troisième et quatrième capteur d'inclinaison (40, 44, 46) respectivement $L_y^C$, $L_x^G$ et $L_y^G$, et qui comportent

(m₁) des moyens (68 à 92) pour former $\sin \theta_B$, $\cos \theta_B$, $\sin \varphi_B$, $\cos \varphi_B$, $\sin \varphi_A$ et $\cos \varphi_A$, $\theta_B$ étant l'angle d'inclinaison longitudinale de l'appareil, auquel répond le troisième capteur d'inclinaison (44), $\varphi_B$ étant l'angle de roulis de l'appareil, auquel répond le quatrième capteur d'inclinaison (46), et $\varphi_A$ étant l'angle de roulis du cadre intérieur (32), auquel répond le premier capteur d'inclinaison (40),

(m₂) des moyens (94) pour former le vrai angle de cap $\psi_B$ selon la relation

$$\tan \psi_B(t) = - \tan \psi_C(t) \, (\cos \theta_B(t)/\cos \varphi_B(t)) + \tan \varphi_B(t) \sin \theta_B(t)$$

et

(m₃) des moyens (98) pour engendrer un signal

$$U_z^C (t) = - \cos \varphi_A(t) \, \Omega_E \sin \Phi(t),$$

$\Omega_E$ étant la vitesse angulaire de la rotation terrestre et $\Phi$ étant la latitude terrestre, et

(n) que le signal $U_z^C(t)$ est appliqué au deuxième générateur de couple (30) du gyroscope d'orientation (10).

2. Appareil de référence de cap et d'assiette selon la revendication 1, caractérisé par le fait que

(o) le signal de sortie du deuxième capteur d'inclinaison (42) peut, en outre, être appliqué au premier générateur de couple (28), pour l'alignement initial sur le nord géographique.

FIG.1

FIG.3

1

**0 048 212**

*Fig. 2*

2

Fig 4

Fig. 5

Fig. 6